# EUROPEAN PATENT APPLICATION

(11) **EP 1 767 411 A2**
(43) Date of publication of application: **28.03.2007**
(21) Application number: 06019788.6
(22) Date of filing: 21.09.2006
(51) Int. Cl.: B60R 21/18, B60R 22/20, B60R 22/26

(54) **Passenger constraining apparatus**

(30) Priority: 26.09.2005 JP 2005278164; 26.09.2005 JP 2005278172; 27.02.2006 JP 2006050537
(71) Applicant: TAKATA CORPORATION, Minato-ku, Tokyo 106-8510 (JP)
(72) Inventor: Kokeguchi, Akira, Minato-ku Tokyo 106-8510 (JP); Hiroshige, Atsushi, Toyota-shi Aichi (JP)
(74) Representative: Banzer, Hans-Jörg

(57) **Abstract**

In order to provide a passenger constraining apparatus in which an inflated inflatable portion can be placed at a high position on a lateral side of a passenger's head without using a large-capacity inflator, a push-up device (20) having first and second levers (21, 22) for pushing up a shoulder belt section (10) is provided on an upper side of a seatback (3). When the shoulder belt section (10) is inflated, upper arm portions (21a, 22a) arranged on an upper side of the shoulder belt section (10) are pressed upward, and the respective levers (21, 22) rotate upward about pivotably supporting portions (23, 24). At this time, lower arm portions (21b, 22b) of the respective levers (21, 22) arranged on a lower side of the shoulder belt section (10) rise and rotate, and a hanging member (25) is tensed between the lower arm portions (21b, 22b). Consequently, the inflated shoulder belt section (10) is pushed upward, and is placed at a high position on the lateral side of the passenger's head.

## Description

The present invention relates to a passenger constraining apparatus for constraining a passenger seated on a vehicle seat with an inflatable belt.

### Background Art

As a passenger constraining apparatus for constraining a passenger seated on a vehicle seat with an inflatable belt, a passenger constraining apparatus having a shoulder anchor arranged on a rear side of the seat with respect to the vehicle, and a passenger constraining belt to be passed through the shoulder anchor and pulled around a front side of the passenger, in which at least a portion of the passenger constraining belt which is arranged on a lateral side of the passenger's head is an inflatable portion is known (for example, Japanese Unexamined Patent Application Publication No. 2003-312439).

The passenger constraining apparatus (air belt apparatus) in Japanese Unexamined Patent Application Publication No. 2003-312439 described above includes a shoulder anchor mounted to an upper portion of a pillar member placed on the obliquely rear side of the vehicle seat, so that a passenger constraining belt passed through the shoulder anchor is pulled around the front side of the passenger seated on the seat.

The passenger constraining belt includes a shoulder belt section which is drawn obliquely from the shoulder anchor via the lateral side of the passenger's head and the front side of an upper body of the passenger to a portion near a lumber part on the other side of the shoulder anchor, and a lap belt section which is continued from a lower end of the shoulder belt section and drawn along the lateral direction so as to cover around an abdominal portion of the passenger. In the same publication, the shoulder belt section is configured with an inflatable bag-shaped belt. The bag-shaped belt is arranged so that an upper end side thereof is positioned on the lateral side of the passenger's head. In the same publication, the lap belt section is also configured with the inflatable bag-shaped belt.

When the vehicle collides, falls on its side, and so on, the shoulder belt section and the lap belt section are inflated to constrain the passenger. At this time, the upper end side of the shoulder belt section is inflated on the lateral side of the passenger's head, that is, between the passenger's head and a side surface of a cabin. Accordingly, the passenger's head is prevented from hitting directly onto the side surface of the cabin or the like.

### Problems to be Solved by the Invention

The inflatable portion of the above-described shoulder belt section or the like is preferably inflated to a position as high as possible and arranged on the lateral side of the center of gravity of the passenger's head or in the vicinity thereof as well.

In order to do so, it is conceivable that the inflatable portion of a large capacity is employed. However, in this case, a high-output inflator is required.

It is an object of the invention to provide a passenger constraining apparatus in which an inflated inflatable portion can be arranged at a high position of the lateral side of the passenger's head without using a high-output inflator.

### Means for Solving the Problems

According to the invention, this object is achieved by a passenger constraining apparatus as defined in claim 1.

A passenger constraining apparatus according to the invention is a passenger constraining apparatus including a passenger constraining belt to be pulled around a front side of a passenger through a lateral side of the passenger's head and having an inflatable portion at least at a portion arranged on the lateral side of the passenger's head, characterized in that a push-up device for pushing up the inflatable portion is provided on an upper surface portion of a seatback, and the push-up device includes: a first lever having an upper arm portion and a lower arm portion arranged respectively on an upper side and a lower side on one half side in the direction of the width of the belt and a connecting portion connecting the upper arm portion and the lower arm portion and arranged on the lateral side of the one half side of the belt, a second lever having an upper arm portion and a lower arm portion arranged respectively on an upper side and a lower side on the other half side in the direction of the width of the belt and a connecting portion connecting the upper arm portion and the lower arm portion and arranged on a lateral side of the other half side of the belt, a first pivotably supporting portion for rotatably supporting the connecting portion of the first lever to an upper portion of the seatback, a second pivotably supporting portion for rotatably supporting the connecting portion of the second lever to the upper portion of the seatback, and a hanging member hung across the lower arm portion of the first lever and the lower arm portion of the second lever for being tensed between the lower arm portions and pushing up the belt when the respective levers rotate and the respective lower arm portions rise upward with respect to the respective pivotably supporting portions.

### Advantages

Since the passenger constraining apparatus of the invention is provided with the push-up device for pushing up the inflatable portion of the passenger constraining belt on the upper portion of the seatback of the seat, the inflated inflatable portion can be placed at a high position on the lateral side of the passenger's head without using a high-output inflator by pushing up the inflatable portion with the push-up device.

An operation of the push-up device is as follows.

When the inflatable portion is inflated, the respective upper arm portions of the first and second levers arranged respectively on the upper side of the one half side and the other half side in the direction of the width of the belt are pushed up by the inflatable portion, and the first and second levers rotate upward about the respective pivotably supporting portions thereof. In association with the rotation of the first and second levers, the lower arm portions of the respective levers arranged respectively on the lower side of the one half side and the other half side of the belt are rotated and raised, and the hanging member is hung across the lower arm portions. Consequently, the inflated inflatable portion is pushed upward by the lower arm portions and the hanging member and is placed at a high position on the lateral side of the passenger's head.

In the invention, since the inflatable portion is adapted to be pushed up by rotating the respective levers by an inflating pressure of the inflatable portion, simplification of the configuration or reduction of manufacturing cost can be achieved without necessity of providing a power source for pushing up the inflatable portion separately.

### Brief Description of the Drawings

Fig. 1 is a perspective view of a passenger constraining apparatus according to an embodiment.
Fig. 2 is a front view of a belt push-up device in the passenger constraining apparatus shown in Fig. 1 before pushing up the belt.
Fig. 3 is a front view of the belt push-up device in the passenger constraining apparatus shown in Fig. 1 when the belt is being pushed upward.
Fig. 4 is a front view of the belt push-up device in the passenger constraining apparatus shown in Fig. 1 after the belt is pushed upward.
Fig. 5 is a side view of the passenger constraining apparatus shown in Fig. 1.

### Best Mode for Carrying Out the Invention

Referring now to the drawings, embodiments of the invention will be described.

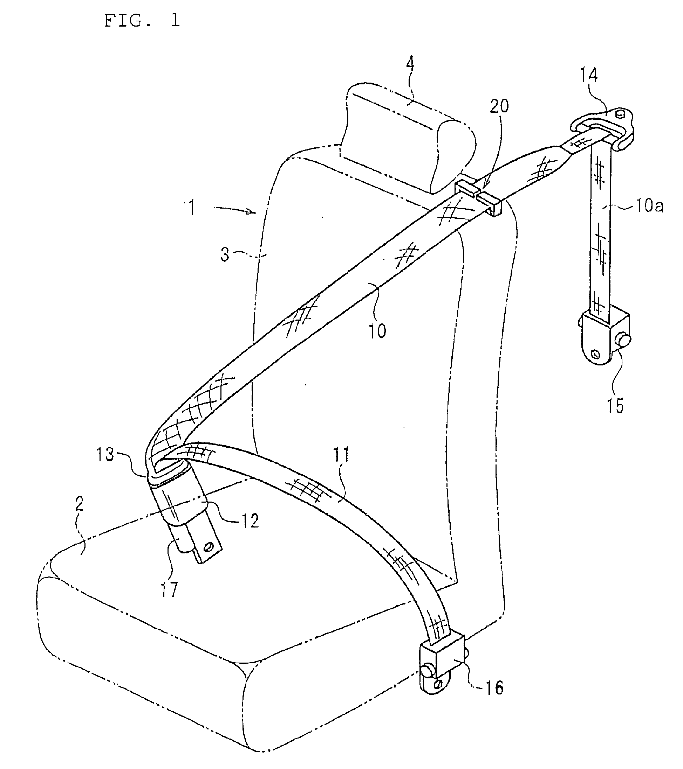

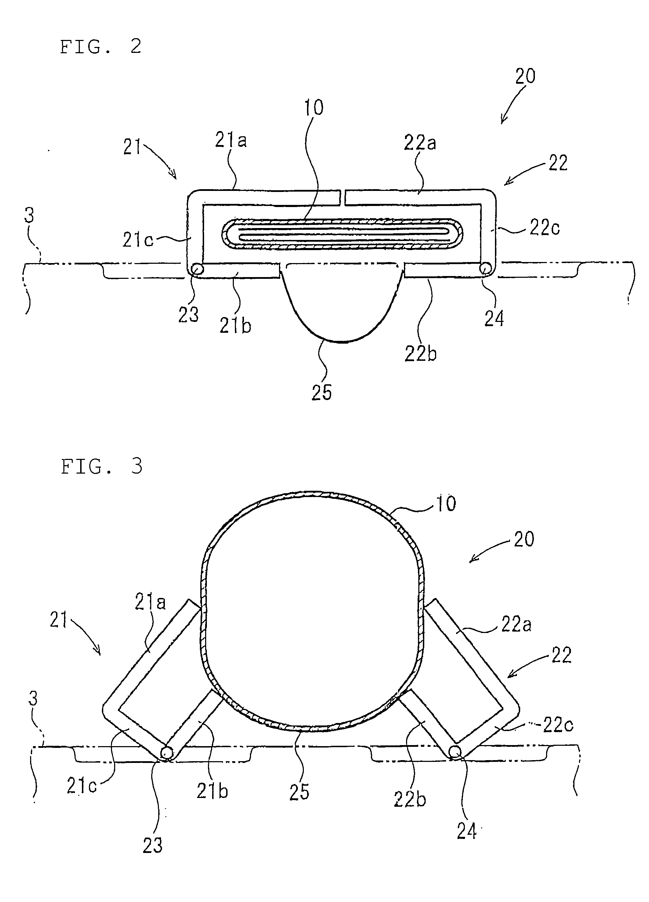

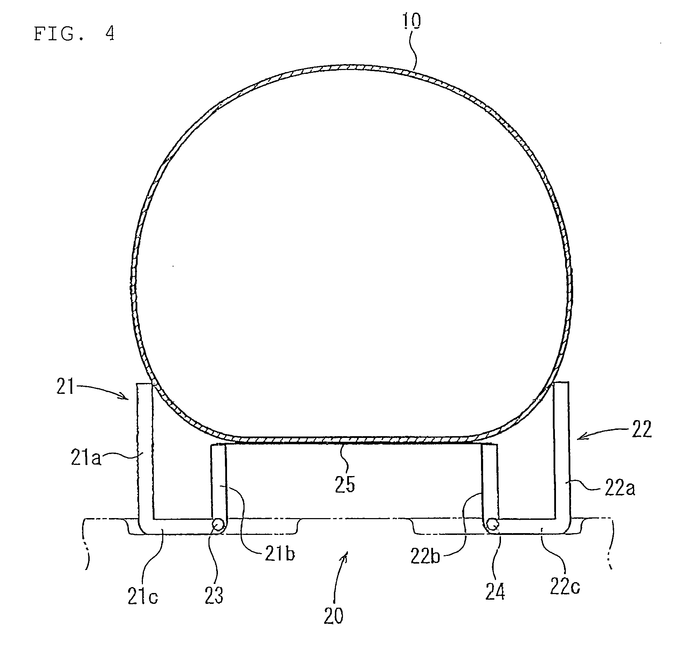

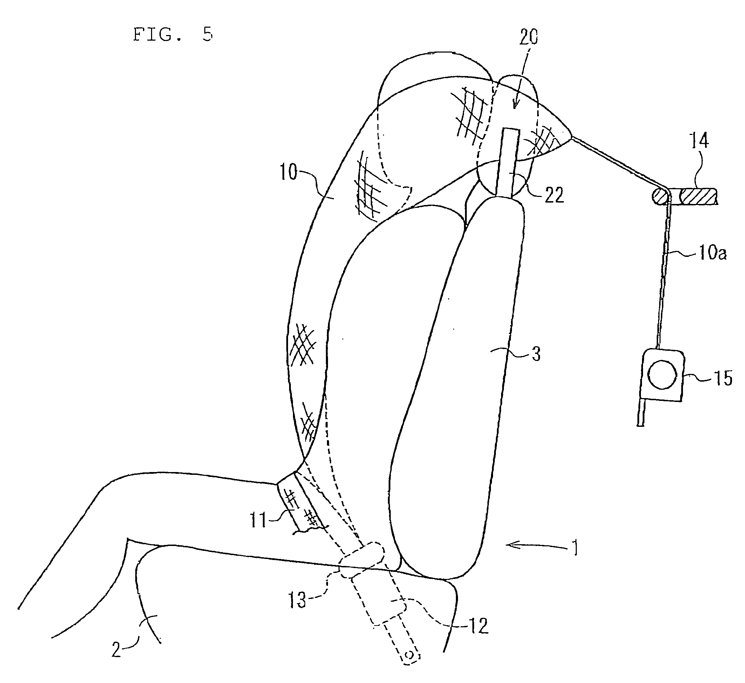

Fig. 1 is a perspective view of a passenger constraining apparatus according to the embodiment; Figs. 2 to 4 are front views of a belt push-up device of the passenger constraining apparatus, and Fig. 5 is a side view of the passenger constraining apparatus. Fig. 1 and Fig. 2 show a state before the belt is pushed up; Fig. 3 shows a state in which the belt is being pushed up; and Fig. 4 and Fig. 5 show a state in which the belt is completely pushed up.

A vehicle seat 1 includes a seat cushion 2 on which a passenger is seated, a seatback 3 which constitutes a back of the seat, and a head rest 4 provided on top of the seatback 3.

In this embodiment, the passenger constraining apparatus includes an inflatable shoulder belt section 10 which passes through a lateral side of the passenger's head seated on the seat 1 and drawn obliquely along a front side of an upper body of the passenger (from the upper left to the lower right in this embodiment), a webbing 10a connected to the shoulder belt section 10, a lap belt section 11 drawn in the lateral direction on an upper side of a lumber part of the passenger, a buckle device 12 installed in adjacent on a lateral side (the right side in this embodiment) of the seat 1, a tongue 13 inserted into the engaged with the buckle device 12 when attaching the belt, a shoulder anchor 14 for guiding the webbing 10a, a push-up device 20 for pushing up the shoulder belt section 10 provided on an upper surface portion of the seatback 3 (un upper surface of the left shoulder portion of the seatback 3 in this embodiment), and so on.

In this embodiment, the shoulder belt section 10, the webbing 10a and the lap belt section 11 constitute a passenger constraining belt, and the shoulder belt section 10 forms an inflatable portion. The shoulder belt section 10 inflates from the lateral side of the head to the front side of the upper body of the passenger.

The shoulder belt section 10 is formed by folding a wide belt-shaped bag into a narrow band shape and covering the same with a cover, and is held in a band shape in the normal state. A distal end of the webbing 10a is connected to an upper end side of the shoulder belt section 10 by sewing or the like, and the tongue 13 is joined to a lower end side.

The webbing 10a is formed of a normal belt similar to a general non-inflatable seatbelt in the related art, and is slidably guided and passed through the shoulder anchor 14. An end of the webbing 10a is retractably joined to a seatbelt retractor (ELR) 15 with an emergency locking mechanism installed on the vehicle.

In this embodiment, the lap belt section 11 is also formed of a non-inflatable normal belt, and is retractably joined at one end with the tongue 13 and at the other end with a seatbelt retractor (ELR) 16 installed on the seat 1 on the opposite side from the buckle device 12.

In this embodiment, an inflator 17 which is activated when urgently necessary such as a vehicle collision or the like to generate high-pressure gas is connected to the buckle device 12, and a duct (not shown) for guiding the gas from the inflator 17 into the shoulder belt section 10 (in the bag) is provided on the tongue 13.

The push-up device 20 includes first and second levers 21, 22 provided respectively on one half side and the other half side in the direction of the width of the shoulder belt section 10 and each formed substantially into an angular C-shape, first and second pivotably supporting portions 23, 24 for supporting the first and second levers 21, 22 rotatably with respect to the upper surface of the left shoulder portion of the seatback 3 respectively, and a hanging member 25 hung across the first and second levers 21, 22 (between lower arm portions 21b, 22b described later) on a lower side of the shoulder belt section 10.

The first lever 21 includes an upper arm portion 21a and a lower arm portion 21b arranged respectively on an upper side and a lower side on the one half side in the direction of the width of the shoulder belt section 10, and extending in the direction of the width of the shoulder belt section 10, and a connecting portion 21c arranged on a lateral side on the one half side of the shoulder belt section 10 for connecting one end (proximal end) sides of the upper arm portion 21a and the lower arm portion 21b.

The second lever 22 includes an upper arm portion 22a and a lower arm portion 22b respectively arranged on upper and lower sides of the other half side in the direction of the width of the shoulder belt section 10 and extending in the direction of the width of the shoulder belt section 10, and a connecting portion 22c arranged on a lateral side of the other half side of the shoulder belt section 10 and connecting one end (proximal end) sides of the upper arm portion 22a and the lower arm portion 22b.

The lower arm portions 21b, 22b of the respective levers 21, 22 are shorter than the upper arm portions 21a, 22a respectively in length in the direction of the width of the shoulder belt section 10.

The first and second levers 21, 22 are arranged on the upper surface of the left shoulder portion of the seatback 3 at different positions in the lateral direction of the seat 1 in such a manner that the distal ends of the upper arm portions 21a, 22a and the distal ends of the lower arm portions 21b, 22b face to each other respectively as shown in Fig. 2.

As shown in Fig. 1, the shoulder belt section 10 is drawn from a rear side of the seat 1 to a front side of the seat 1 through the inside of a frame surrounded by the series of upper arm portions 21a, 22b, the connecting portion 22c, the lower arm portions 22b, 21b and the connecting portion 21c. In other words, in this embodiment, the first and second levers 21, 22 also serve as a belt guide for guiding the shoulder belt section 10.

The first and second pivotably supporting portions 23 24 support the connecting portions 21c, 22c of the respective levers 21, 22 to the seatback 3 respectively so that the first and second levers 21, 22 are capable of rising and rotating in the direction away from each other. In this embodiment, the respective pivotably supporting portions 23, 24 support portions of the respective connecting portions 21c, 22c near the lower ends thereof. However, it is also possible to support upper end portions or midsections of the respective connecting portions 21c, 22c.

The hanging member 25 is formed of a linear member such as a wire in this embodiment, and both end sides thereof are secured to distal end portions of the lower arm portions 21b, 22b of the respective levers 21, 22. As shown in Fig. 4, the hanging member 25 is adapted to be tensed between the distal end portions of the lower arm portions 21b, 22b when the respective levers 21, 22 rotate upward and the respective lower arm portions 21b, 22b assume respectively an upright posture substantially vertical to the upper surface of the seatback 3. However, the hanging member 25 may slightly sag so as to lie along an outer surface of the inflated shoulder belt section 10.

In this embodiment, when the respective levers 21, 22 (the respective lower arm portions 21b, 22b) are tilted down to the upper surface of the seatback 3 as shown in Fig. 2, the hanging member 25 is in a state of being entered into the inside of the seatback 3. The hanging member 25 is pulled out from the seatback 3 by the lower arm portions 21b, 22b when the respective lower arm portions 21b, 22b are rotated and raised.

A method of storing the hanging member 25 when the respective levers 21, 22 are tilted down to the upper surface of the seatback 3 is arbitrary. For example, it is also possible to provide a slit, a recess, or the like on the upper surface of the seatback 3 and store the hanging member 25 therein and cover the slit or the recess by an outer cover material of the seatback 3. It is also possible to embed the hanging member 25 into a cushion material by insert molding or the like when molding the cushion material of the seatback 3. Alternatively, it is possible to provide the hanging member 25 integrally with the outer cover material of the seatback 3, so that the hanging member 25 is separated from the surrounding outer cover material and tensed between the lower arm portions 21b, 22b when the respective lower arm portions 21b, 22b are rotated and raised.

In the passenger constraining apparatus in this configuration, the shoulder belt section 10 is used in the same manner as a normal seatbelt. As described above, when the shoulder belt section 10 is attached, the push-up device 20 functions as the belt guide. When the inflator 17 is activated in the case in which the vehicle collides or falls on its side, gas is introduced into the shoulder belt section 10, and the shoulder belt section 10 is inflated so as to increase the thickness (diameter) thereof as shown in Figs. 4 and 5.

In this case, the respective upper arm portions 21a, 22a of the first and second levers 21, 22 arranged on the upper side of the shoulder belt section 10 are pushed upward by the shoulder belt section 10, and the respective levers 21, 22 rotate upward about the respective pivotably supporting portions 23, 24. At this time, as shown in Figs. 2 to 4, the lower arm portions 21b, 22b of the respective levers 21, 22 arranged on the lower side of the shoulder belt section 10 rise and rotate, and the hanging member 25 is tensed between the lower arm sections 21b, 22b. Consequently, the inflated shoulder belt section 10 is pushed upward by the lower arm portions 21b, 22b and the hanging member 25, and is placed at a high position on the lateral side of the passenger's head.

In this manner, in the passenger constraining apparatus, since the shoulder belt section 10 is pushed upward by the push-up device 20 provided on the upper surface side of the seatback 3, the inflated shoulder belt section 10 can be placed at a high position on the lateral side of the passenger's head without using a high-output inflator.

Since this passenger constraining apparatus is configured to push up the shoulder belt section 10 by rotating the respective levers 21, 22 by an inflating pressure of the shoulder belt section 10 as described above, it is not necessary to provide a power source for pushing up the shoulder belt section 10 separately, so that simplification of the configuration or reduction of manufacturing cost can be achieved.

The above-described embodiment is shown only for illustrative purposes of the invention, and the invention is not limited to the above-described embodiment.

For example, in the above-described embodiment, the hanging member 25 is formed of the linear member such as the wire. However, it may be formed of members of various mode, such as a band-shaped member or a sheet-type member.

## Claims

1. A passenger constraining apparatus comprising:
a passenger constraining belt (10, 10a, 11) to be pulled around a front side of a passenger through a lateral side of the passenger's head and having an inflatable portion (10) at least at a portion arranged on the lateral side of the passenger's head,
**characterized in that** a push-up device (20) for pushing up the inflatable portion (10) is provided on an upper surface portion of a seatback (3), and
the push-up device (20) comprises:
a first lever (21) having an upper arm portion (21a) and a lower arm portion (21b) arranged respectively on an upper side and a lower side on one half side in the direction of the width of the belt (10) and a connecting portion (21c) connecting the upper arm portion (21a) and the lower arm portion (21b) and arranged on a lateral side of the one half side of the belt (10),
a second lever (22) having an upper arm portion (22a) and a lower arm portion (22b) arranged respectively on an upper side and a lower side on the other half side in the direction of the width of the belt (10) and a connecting portion (22c) connecting the upper arm portion (22a) and the lower arm portion (22b) and arranged on a lateral side of the other half side of the belt (10),
a first pivotably supporting portion (23) for rotatably supporting the connecting portion (21c) of the first lever (21) to an upper portion of the seatback (3),
a second pivotably supporting portion (24) for rotatably supporting the connecting portion (22c) of the second lever (22) to the upper portion of the seatback (3), and
a hanging member (25) hung across the lower arm portion (21b) of the first lever (21) and the lower arm portion (22b) of the second lever (22) for being tensed between the lower arm portions (21b, 22b) and pushing up the belt when the respective levers (21, 22) rotate and the respective lower arm portions (21b, 22b) rise upward with respect to the respective pivotably supporting portions (23, 24).
